# EUROPEAN PATENT SPECIFICATION

(11) **EP 4 579 325 B1**
(45) Date of publication and mention of the grant of the patent: **07.10.2026**
(21) Application number: 24222193.5
(22) Date of filing: 20.12.2024
(51) Int. Cl.: G02F 1/1335, G02F 1/13357

(54) **DISPLAY DEVICE**
ANZEIGEVORRICHTUNG
DISPOSITIF D'AFFICHAGE

(30) Priority: 29.12.2023 KR 20230197867
(43) Date of publication of application: 02.07.2025
(73) Proprietor: LG Display Co., Ltd., Seoul, 07336 (KR)
(72) Inventor: CHOI, Eun Hee, 10845 Paju-si, Gyeonggi-do (KR); KIM, Jin Ryun, 10845 Paju-si, Gyeonggi-do (KR); KIM, Ji Gon, 10845 Paju-si, Gyeonggi-do (KR); LEE, Yong Seok, 10845 Paju-si, Gyeonggi-do (KR); KIM, Dae Yong, 10845 Paju-si, Gyeonggi-do (KR)
(74) Representative: Viering, Jentschura & Partner mbB Patent- und Rechtsanwälte

(56) References cited:
- CN-A- 115 598 880
- US-A1- 2021 294 015
- US-A1- 2022 026 625

## Description

### TECHNICAL FIELD

Embodiments relate to a display device.

### BACKGROUND

As the information society develops, the demand for display devices to display images is increasing in various forms, and recently, various display devices such as liquid crystal display devices (LCD), plasma display panels (PDP), and organic light emitting display devices (OLED) have been utilized.

Recently, multimedia functions of electronic devices such as mobile terminals have been improving. For example, cameras are being embedded in mobile terminals as a basic feature, and the resolution of the cameras is increasing to the level of conventional digital cameras. However, a front camera of a mobile terminal limits a screen design, making the screen design difficult. In order to reduce a space occupied by the camera, screen designs including a notch or a punch hole have been adopted for mobile terminals, but a screen size is still limited due to the camera, making it difficult to implement a full-screen display.

In order to implement the full-screen display, a method of providing an imaging area disposed with low-resolution pixels in a screen of a display panel and disposing a camera and/or various sensors in the imaging area has been proposed.

US 2021/294015 A1 discloses that a display screen includes a display panel, a back light system, and an optical device concealed under the display panel, where a transmission light path formed by light rays received or transmitted by the optical device passes through the display screen. The display screen includes a fill-in light system, where the fill-in light system is disposed between the back light system and the optical device. The fill-in light system includes a first light source and a light guide member configured to transmit a light ray emitted by the first light source.

CN 115 598 880 A discloses that a display device includes: a display panel including a first display area and a second display area, wherein the first display area at least partially surrounds the second display area; a main backlight module disposed corresponding to the first display area and providing a backlight source for the first display area; and a reinforcing backlight structure including a sub-backlight module and an optical conversion member, the optical conversion member is disposed at least corresponding to the second display area, and the optical conversion member is disposed on a light-emitting side of the sub-backlight module, and light emitted from the sub-backlight module enters the second display area after passing through the optical conversion member.

US 2022/026625 A1 discloses that an electronic device includes a liquid crystal panel and an illumination device. The illumination device includes a first light guide having a first opening and facing the liquid crystal panel, a first light source facing the first light guide, a second light guide provided in the first opening and having a first main surface facing the liquid crystal panel, a second main surface, and a side surface, a second light source having a light emitting surface facing the side surface, and a wavelength conversion element located between the side surface and the light emitting surface, and configured to convert a wavelength of light from the second light source.

### SUMMARY OF THE INVENTION

An object of the present disclosure is directed to providing a display device in which an imaging area is not visible from the outside.

In addition, an object of the present disclosure is directed to providing a display device with an improved dark area phenomenon through a reflector while maintaining the performance of a camera.

In addition, an object of the present disclosure is directed to providing a display device that can be easily miniaturized through an extending portion.

The objects of the present disclosure are not limited thereto and may also include objects or effects that may be identified from the configurations or embodiments to be described below.

According to an aspect of the present disclosure, a display device according to claim 1 is provided. Further embodiments are described in the dependent claims.

A display device according to at least one embodiment of the present disclosure therefore inter alia includes a backlight unit, a display panel disposed on the backlight unit and including a first display area and a second display area, and a sensor disposed under the second display area, wherein the backlight unit includes a light guide plate disposed under the first display area and the second display area, a light source configured to radiate light to the light guide plate, and a reflector disposed between the second display area and the sensor and reflecting incident visible light to the second display area.

Light emitted from the sensor may pass through the reflector.

The light emitted from the sensor may be emitted to the outside by passing through the display panel, reflected from an external object, and received by the sensor.

The sensor may include an infrared camera.

The display device may further include an optical sheet disposed on the backlight unit, wherein the optical sheet may include an opening corresponding to the second display area.

The light source may be disposed on one side of the light guide plate, and the reflector may be disposed on the other side facing the one side of the light guide plate.

The light guide plate may include a sloped surface disposed on the other side thereof, and the reflector may be disposed on the sloped surface.

The sloped surface may be disposed in an area overlapping the sensor.

The reflector may reflect light incident on the light guide plate to the second display area.

The light guide plate may include an upper surface and a lower surface that are connected to the sloped surface.

The sloped surface may not overlap the lower surface.

A thickness of the light guide plate may increase toward the other side of the light guide plate.

The light guide plate may include a flat surface extending from the sloped surface to a side opposite to the light source, and the flat surface may overlap the second display area.

A thickness of the light guide plate on the flat surface may be less than or equal to a thickness of the light guide plate on the sloped surface.

The display device may further include a first prism disposed between the sloped surface and the sensor.

The sloped surface may not overlap the upper surface, and the display device may further include a light-emitting unit disposed on the other side of the light guide plate.

A thickness of the light guide plate may decrease toward the other side thereof.

The display device may further include a second prism disposed between the sloped surface and the display panel.

The display device may further include a light-emitting unit disposed on the other side of the light guide plate, and the second prism may be disposed between the reflector and the light-emitting unit.

The reflector may reflect light output from the light source to the sensor, and the reflector reflects light output from the light-emitting unit to the display panel.

The light guide plate may include a patterned area overlapping the first display area and having a pattern, and a non-patterned area overlapping the second display area.

The optical sheet may overlap the patterned area and the non-patterned area.

The optical sheet may be misaligned with the non-patterned area.

The reflector reflects light in a visible wavelength band and transmit light in an infrared wavelength band.

The reflector may overlap an area overlapping an opposing incident light portion of the first display area and the second display area.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a perspective view of a display device according to an embodiment of the present disclosure;
FIG. 2A is an exploded perspective view of the display device according to the embodiment of the present disclosure;
FIG. 2B is a schematic cross-sectional view of the display device according to the embodiment of the present disclosure;
FIG. 3 is a cross-sectional view of a display device according to a first embodiment;
FIG. 4 is a view for describing a cross-section and a function of a reflector in the display device according to the embodiment of the present disclosure;
FIG. 5 is a view showing a light guide plate in the display device according to the first embodiment;
FIG. 6 is a cross-sectional view of a panel in the display device according to the first embodiment;
FIG. 7 is a modified example of FIG. 3;
FIG. 8 is a view for describing a function of a sensor in the display device according to the embodiment;
FIG. 9 shows another structure of a light guide plate in the display device according to the embodiment;
FIGS. 10 and 11 are views for describing a thickness change of the light guide plate according to a field of view and a structure of the light guide plate in the display device;
FIG. 12 is a cross-sectional view of a display device according to a second embodiment;
FIG. 13 is a view showing a light guide plate, a reflector, and a first prism in the display device according to the second embodiment;
FIG. 14 is a cross-sectional view of a display device according to a third embodiment;
FIG. 15 is a view showing a light guide plate, a reflector, and a second prism in the display device according to the third embodiment;
FIG. 16 is a plan view of a display device according to a modified example;
FIG. 17 is a cross sectional view along line AA' in FIG. 16;
FIG. 18 is a cross sectional view along line BB' in FIG. 16;
FIG. 19 is a view showing a light guide plate and a reflector in a display device according to a modified example;
FIG. 20 is a cross-sectional view of a display device according to another modified example; and
FIG. 21 is a cross-sectional view of a display device according to still another modified example.

### DETAILED DESCRIPTION OF EXEMPLARY EMBODIMENTS

Hereinafter, exemplary embodiments according to the present disclosure will be described in detail with reference to the accompanying drawings.

However, the technical spirit of the present disclosure is not limited to some of the described embodiments, but may be implemented in various different forms, and one or more of the components among the embodiments may be used by being selectively coupled or substituted without departing from the scope of the technical spirit of the present disclosure.

In addition, terms (including technical and scientific terms) used in embodiments of the present disclosure may be construed as meaning that may be generally understood by those skilled in the art to which the present disclosure pertains unless explicitly specifically defined and described, and the meanings of the commonly used terms, such as terms defined in a dictionary, may be construed in consideration of contextual meanings of related technologies.

In addition, the terms used in the embodiments of the present disclosure are for describing the embodiments and are not intended to limit the present disclosure.

In the specification, a singular form may include a plural form unless otherwise specified in the phrase, and when described as "at least one (or one or more) of A, B, and C," one or more among all possible combinations of A, B, and C may be included.

In addition, the terms, such as first, second, A, B, (a), and (b) may be used to describe components of the embodiments of the present disclosure.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction with respect to one component.

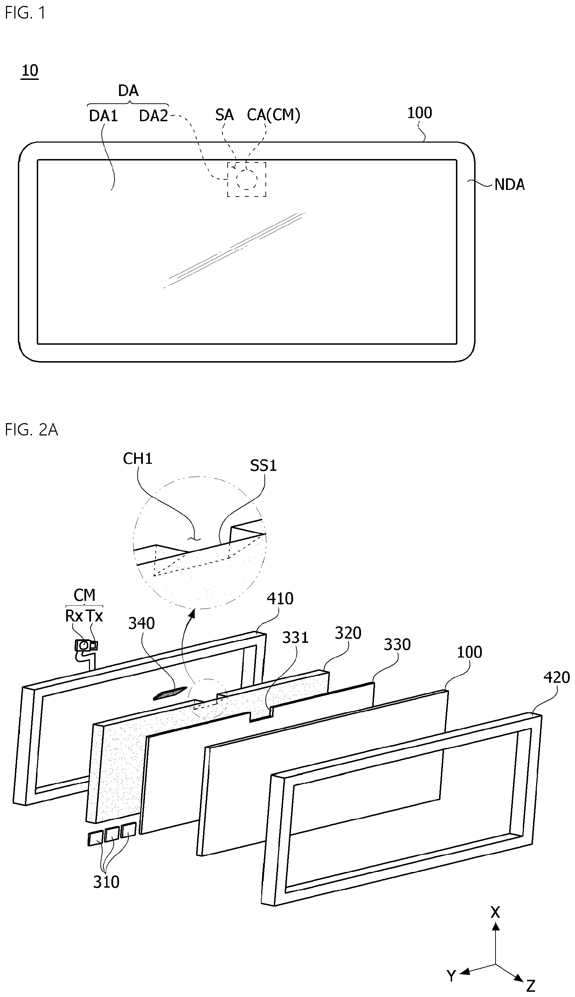

FIG. 1 is a perspective view of a display device according to an embodiment of the present disclosure.

Referring to FIG. 1, a display device 10 according to the embodiment may include a display panel 100 for displaying images and a sensor CM for capturing images. The display device 10 of the embodiment may be applied to various electronic devices such as smartphones, tablets, smart pads, TVs, and monitors.

The display panel 100 may include a display area DA including a plurality of sub-pixels and a non-display area NDA located at at least one side of the display area DA. As shown, the non-display area NDA is disposed on a portion of the display panel 100, but is not limited thereto.

The display area DA may include a first display area DA1 and a second display area DA2. A plurality of pixels in the first display area DA1 may emit light, and images may be displayed by the emitted light. The second display area DA2 may overlap the sensor CM. The second display area DA2 may include a sensing area CA overlapping the sensor CM and a surrounding area SA adjacent to the sensing area CA.

The sensor CM may be placed under the display panel 100. The sensor CM may be disposed to be spaced apart from the display panel 100. In addition, an area of the second display area DA2 is formed to be larger than an area of the sensor CM, but is not limited thereto. For example, the second display area DA2 and the sensor CM may be formed to have substantially the same area, or the second display area DA2 may be formed to be smaller than the sensor CM.

In addition, the sensor CM is formed to overlap an upper area of the display area DA, but is not limited to thereto. The location of the sensor CM may vary under the display panel 100 depending on an electronic device to which the display device 10 is applied. For example, the sensor CM may overlap un upper left area or upper central area of the display area DA. Corresponding to the location of the sensor CM, the second display area DA2 may also be disposed in the upper center area.

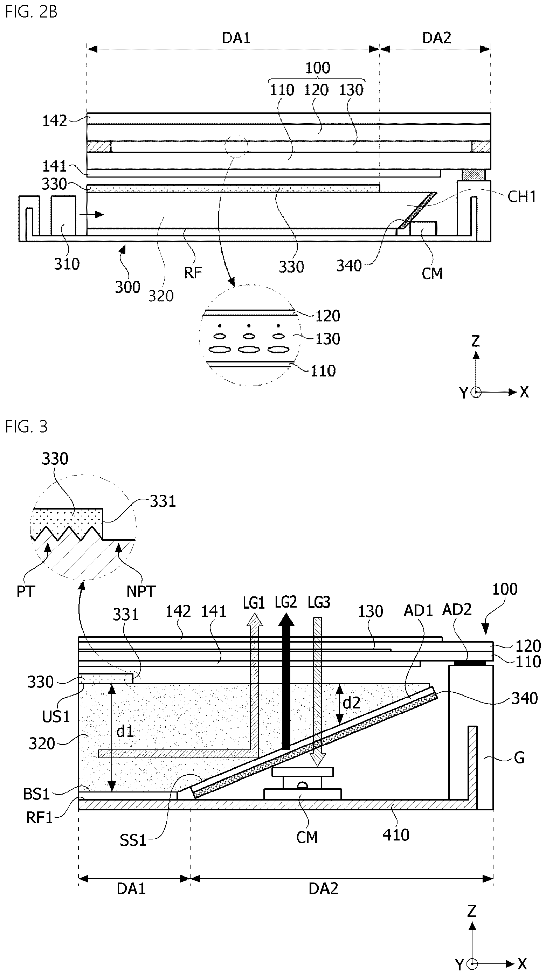

FIG. 2A is an exploded perspective view of the display device according to the embodiment of the present disclosure. FIG. 2B is a schematic cross-sectional view of the display device according to the embodiment of the present disclosure.

Referring to FIGS. 2A and 2B, the display device 10 according to the embodiment may include a backlight unit 300, a display panel 100, and a case member.

The display panel 100 may include a lower substrate 110, an upper substrate 120, and a liquid crystal layer 130 interposed between the lower substrate 110 and the upper substrate 120. The lower substrate 110 and the upper substrate 120 may be formed of glass or plastic.

Signal lines and pixels may be provided on the display panel 100. The signal lines may include data lines and gate lines that intersect each other, a common line for supplying a common voltage to common electrodes, and gate control signal lines for supplying a control signal to a gate driving circuit. Pixels may be disposed in intersection areas of the data lines and the gate lines. Each of the pixels may include a thin film transistor (TFT), a pixel electrode, and a common electrode. The thin film transistor may supply a data voltage of the data line to the pixel electrode in response to a gate signal of the gate line.

A liquid crystal of the liquid crystal layer 130 may be driven by an electric field generated by a potential difference between the data voltage supplied to the pixel electrode and the common voltage supplied to the common electrode, thereby adjusting the transmission amount of light incident from the backlight unit. The liquid crystal display panel may be applied to various conventional panel structures without limitation.

A black matrix and a color filter may be provided on the upper substrate 120 of the display panel 100. A lower surface of the upper substrate 120 may be a surface facing the lower substrate 110. As described below, the display panel 100 may have a flip-type structure in which the black matrix and the color filter are disposed on the upper substrate 120.

In addition, the common electrode may be provided on the lower surface of the upper substrate 120 in a vertical electric field driving method such as a twisted nematic (TN) mode and a vertical alignment (VA) mode, and provided on the upper surface of the lower substrate in a horizontal electric field driving method such as an in plane switching (IPS) mode and a fringe field switching (FFS) mode.

Since the black matrix is formed of a light blocking material in a matrix structure, light leakage to an area other than a pixel area may be blocked. The color filter may be located between the black matrices in the pixel area. The color filter may include a red color filter, a green color filter, and a blue color filter.

An upper polarizing plate 142 may be located on the upper substrate 120 of the display panel 100. In addition, a lower polarizing plate 141 may be located on the lower substrate 110 of the display panel 100. A light transmission axis of the upper polarizing plate 142 may intersect or may be orthogonal to a light transmission axis of the lower polarizing plate 141. In addition, an alignment layer for setting a pre-tilt angle of the liquid crystal may be disposed on inner surfaces of the upper substrate 120 and the lower substrate 110 that are in contact with the liquid crystal.

The backlight unit 300 may include a light source 310, a light guide plate 320, a reflective sheet RF, an optical sheet 330, and a reflector 340, etc. The backlight unit 300 may convert light emitted from the light source 310 into a uniform surface light source through the light guide plate 320 and the optical sheet 330 and provide the light to the display panel 100. The backlight unit 300 is described as being implemented in an edge type, but is not limited thereto and may also be implemented in a direct type.

The light source 310 may be singular or plural. The light source 310 may be implemented as a light emitting diode (LED). In this case, the light emitting diode may output light in various wavelength bands. For example, the light emitting diode may include at least one of a blue light emitting diode outputting blue light, a red light emitting diode outputting red light, and a magenta light emitting diode outputting magenta light which is a mixture of blue light and red light. The light source 310 may include a wavelength conversion layer that converts a wavelength of the light emitted from the light-emitting diode. Therefore, the light incident from the light source to the light guide plate may be converted into white light.

The light guide plate 320 may convert the light emitted from the light source 310 into the surface light source and provide the light to the display panel 100. The reflective sheet RF may be disposed on a lower surface of the light guide plate 320 to reflect light directed downward from the light guide plate 320.

The optical sheet 330 may be disposed between the light guide plate 320 and the display panel 100. The optical sheet 330 may include at least one prism sheet or at least one diffusion sheet. The optical sheet 330 may diffuse light incident from the light guide plate 320 and refract an optical path so that the light is incident at an angle substantially perpendicular to a light incident surface of the display panel 100.

The reflector 340 is disposed obliquely in the second display area DA2 with respect to a direction from the light source 310 toward the light guide plate. In addition, the reflector 340 may be disposed obliquely with respect to the upper surface and the lower surface of the light guide plate 320. For example, the reflector 340 may be disposed on a sloped surface formed at an end portion of the light guide plate 320. The reflector 340 and the sloped surface of the light guide plate 320 may be formed to be inclined at a predetermined angle other than a right angle with respect to the upper surface and the lower surface of the light guide plate 320.

The light guide plate 320 may have a chamfered portion CH1 formed in an area overlapping the second display area DA2 so that the reflector 340 is disposed thereon. The chamfered portion CH1 may be formed at an end portion of the light guide plate 320 and may have a sloped surface SS1.

The reflector 340 may not be parallel to a direction (an X-axis direction) from the light source 310 toward the light guide plate 320. That is, the reflector 340 may have a surface (a lower surface or a surface in contact with the sloped surface) that is misaligned with the direction from the light source 310 toward the light guide plate 320. In addition, a reflecting surface of the reflector 340 may form a predetermined angle by intersecting with the direction from the light source 310 towards the light guide plate 320.

The optical sheet 330 may include an opening 331 formed in an area corresponding to the sensor or the second display area DA2. Therefore, the opening 331 of the optical sheet 330 may overlap the chamfered portion CH1 of the light guide plate 320. However, the present disclosure is not necessarily limited to thereto, and the opening may not be formed in the optical sheet 330. That is, the optical sheet 330 may also be present in an area overlapping with the sensor (or the second display area), thereby allowing the optical sheet 330 to overlap the sensor (or the second display area).

The sensor CM may include a transmitting unit Tx and a receiving unit Rx. The sensor CM may be referred to as "a camera module,", "a camera sensor,", "a camera unit,", etc. For example, the sensor CM may be an infrared camera. Alternatively, the sensor CM may be an infrared sensor (IR sensor).

The transmitting unit Tx of the sensor CM may radiate infrared ray (IR). The receiving unit Rx may receive the reflected light of the radiated infrared ray reflected from an object (e.g., a person, etc.). Therefore, the sensor CM may adjust the amount of light depending on an intended use or a distance to a user. The amount of light of the sensor CM may have an optimal amount of light based on the intended use or the distance to the user. The sensor CM according to various embodiments may be operated using a preset optimal amount of light corresponding to the intended use or the distance from the user.

In addition, the sensor CM may extract characteristics of a subject. According to various embodiments, the sensor CM may generate image data, etc. that can recognize that the subject is the user's face when the subject is a user's face by receiving the reflected light. In addition, the sensor CM may generate data distinguishing a direction of a face and a location of the face. For example, the sensor CM may generate or extract data to identify a shape of the face and identify locations of eyes, a nose, a mouth, a forehead, etc. of the face. In addition, the recognition of the subject, the extraction and the generation of data, etc. may be performed in the display device or an electronic device that are provided with the sensor CM, not in the sensor CM. In the above description, the subject was described as the user's face, but is not limited thereto. In addition, the sensor CM may extract not only the characteristics of the subject but also a heart rate, iris information, etc. and extract various pieces of other subject information.

The case member may include a bottom cover 410, a support frame, and a top cover 420.

The bottom cover 410 may have a structure that surrounds the backlight unit 300 or the display panel 100. For example, the bottom cover 410 may be a quadrangular frame. In addition, the bottom cover 410 may be formed of various materials. For example, the bottom cover 410 may be formed of metal. Therefore, reliability of the display device can be improved.

The support frame may support the lower surface of the lower substrate of the display panel 100. The support frame may also be referred to as a guide panel or a guide frame. The support frame may be shown as "G" in FIG. 3. The support frame may be fixed by being coupled by the bottom cover 410 and a fixing member. The support frame may be made of a quadrangular frame mixed with a glass fiber mixed in synthetic resin such as polycarbonate, made of plastic, etc., or made of stainless steel. Meanwhile, a buffer member may be located between the lower substrate and the support frame. Therefore, the lower substrate of the display panel 100 can be protected from an impact by the support frame.

The top cover 420 may surround an edge of the display panel 100, an upper surface and side surfaces of the support frame, and side surfaces of the bottom cover 410. However, sizes of the top cover and the bottom cover may be changed in various ways.

In addition, the top cover 420 may be made of electronic galvanized iron (EGI), stainless steel or the like. The top cover 420 may be fixed to the support frame with hooks or screws. In addition, a buffer member may be located between the upper substrate and the top cover. Therefore, the upper substrate of the display panel 100 can be protected from an impact by the top cover 420.

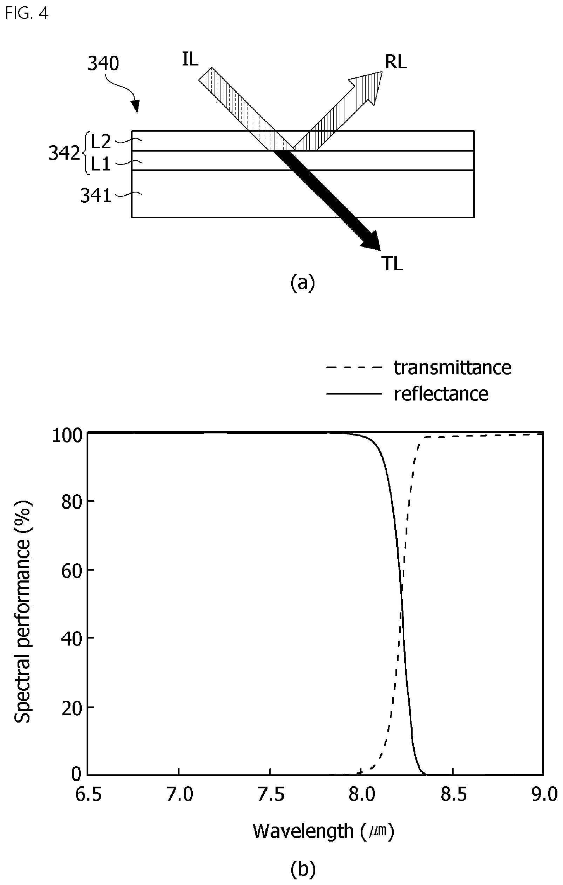

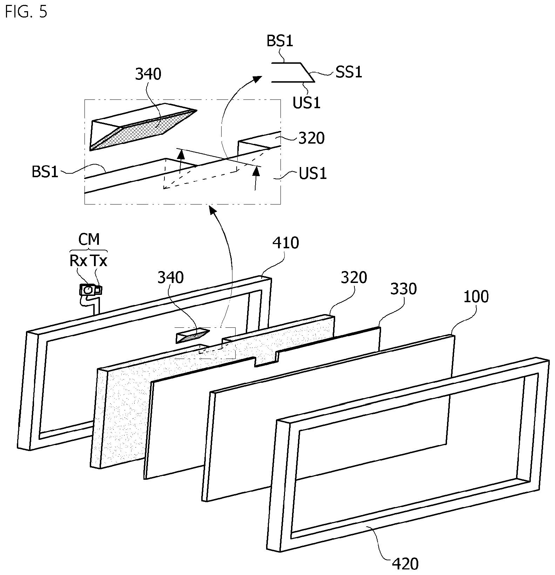

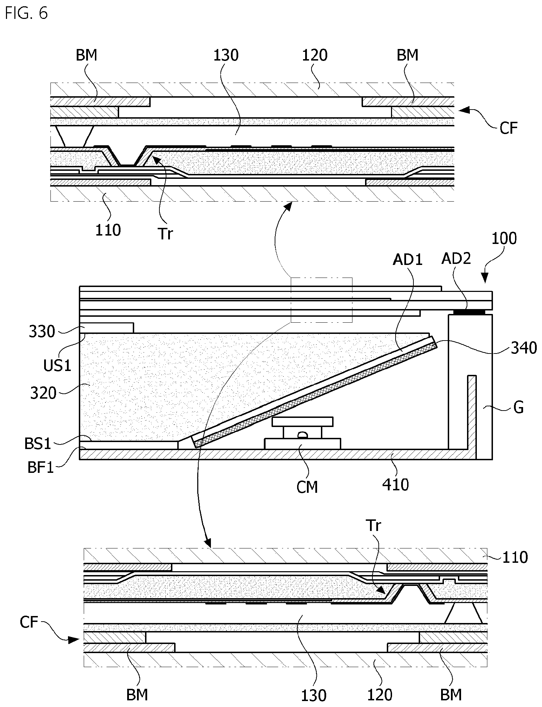

FIG. 3 is a cross-sectional view of a display device according to a first embodiment, FIG. 4 is a view for describing a cross-section and a function of a reflector in the display device according to the embodiment of the present disclosure, FIG. 5 is a view showing a light guide plate in the display device according to the first embodiment, and FIG. 6 is a cross-sectional view of a panel in the display device according to the first embodiment.

Referring to FIG. 3 and FIG. 5, as described above, the light guide plate 320 includes an upper surface US1, a lower surface BS1, and a sloped surface SS1. The upper surface US1 and the lower surface BS1 may be flat surfaces and may be surfaces facing each other in a stacking direction.

**In** the light guide plate 320, the upper surface US1 and the lower surface BS1 may be spaced apart from each other and may be connected by side surfaces and the sloped surface SS1. The sloped surface SS1 may be located in a partial area of the light guide plate 320. In addition, the sloped surface SS1 may be located inside the light guide plate 320 or at the edge of the light guide plate 320 and may be located between the upper surface US1 and the lower surface BS1 or outside the upper surface US1 or the lower surface BS1 of the light guide plate 320.

The sloped surface SS1 is a surface sloped at a predetermined angle with respect to the upper surface US1 and the lower surface BS1. The sloped surface SS1 may be located on the light guide plate 320, particularly on an opposing light portion or opposing incident light portion that opposes to an incident light portion facing the light source 310. Therefore, the dark area phenomenon generated by the sensor CM can be easily improved by reflecting visible light emitted to the opposing light portion.

In addition, corresponding to the location of the sloped surface SS1, the reflector 340 may be located to face the light source disposed at one side of the light guide plate 320. For example, the reflector 340 may be disposed at the other side of the light guide plate 320. In the embodiments of the present disclosure, one side of the light guide plate 320 may correspond to the incident light portion adjacent to the light source, and the other side of the light guide plate 320 may correspond to the opposing light portion or opposing incident light portion that opposes the light incident portion. In other words, the reflector 340 may also be located closer to the opposing light portion or the opposing incident light portion than the incident light portion. By a first adhesive member AD1, the reflector 340 may be bonded to the sloped surface SS1.

The optical sheet 330 may be located on the upper surface of the light guide plate 320. The optical sheet 330 may not be located in an area of the upper surface US1 that overlaps the sensor CM. Therefore, the luminance of the light reflected through the reflector 340 may be maintained high.

The lower surface BS1 of the light guide plate 320 may be located adjacent to the bottom cover 410. The lower surface BS1 of the light guide plate 320 may be located closer to the bottom cover 410 than the upper surface US1 is. In addition, a first reflective sheet RF1 may be disposed on the lower surface BS1 of the light guide plate 320. The first reflective sheet RF1 may reflect light directed downward from the light guide plate 320 in the light guide plate 320.

The first reflective sheet RF1 may not overlap the sloped surface SS1. That is, the first reflective sheet RF1 may be disposed to be misaligned with the sloped surface SS1 in the stacking direction. The first reflective sheet RF1 may be disposed to be spaced apart from the sensor CM. The first reflective sheet RF1 may correspond to the above-described "reflective sheet".

The sloped surface SS1 may be connected to the upper surface US1 and the lower surface BS1. For example, the sloped surface SS1 may be located between the upper surface US1 and the lower surface BS1. In addition, the sloped surface SS1 may be formed on the chamfered portion CH1 of the light guide plate 320.

The sloped surface SS1 may be misaligned with the lower surface BS1 in the stacking direction. In other words, the sloped surface SS1 may not overlap the lower surface BS1 in the stacking direction. In addition, a width W of the light guide plate 320 may increase in the stacking direction (or a first direction) on the sloped surface SS1 due to the sloped surface SS1.

For example, one end portion of the upper surface US1 may come into contact with one end portion of the sloped surface SS1, and one end portion of the lower surface BS1 may come into contact with the other end portion of the sloped surface SS1. In this case, a thickness d2 of the light guide plate 320 may decrease from the other end portion to the one end portion of the sloped surface SS1. The upper surface US1 and the lower surface BS1 of the light guide plate 320 may be flat except for the sloped surface SS1, but this is not necessarily limited thereto. The thickness d2 of the light guide plate 320 at the sloped surface SS1 may be less than or equal to a thickness d1 of the light guide plate 320 in an area other than the sloped surface SS1.

The reflector 340 may be located on the sloped surface SS1 to reflect the light guided along the light guide plate 320 to the second display area DA2. In other words, the reflector 340 may be configured to reflect the light output from the light source to the display panel 100. With this configuration, the dark area phenomenon generated in the second display area can be improved due to the sensor CM being located under the display panel 100.

The reflector 340 may transmit light (e.g., infrared ray) emitted from a transmitting unit of the sensor CM. Therefore, sensing through the sensor CM may be smoothly performed.

The reflector 340 may be referred to as a "filter" or a "a reflecting member". The reflector 340 may be formed of a material and a structure that reflects light in a visible wavelength band and transmits light in an infrared wavelength band. For example, the reflector 340 may be a dichroic filter, but is not necessarily limited thereto and various filters may be applied.

In addition, the sloped surface SS1 may have various optical patterns for diffusion. Therefore, light reflected from the reflector 340 provided on the sloped surface SS1 may be diffused toward the display panel 100. Therefore, the dark area in the second display area can be improved, and occurrence of a bright line, etc. due to the reflected light can be suppressed. That is, light uniformity may be improved.

Referring to FIG. 4, the reflector 340 may include a light transmitting substrate 341 and a plurality of layers 342. For example, the light transmitting substrate 341 may be formed of a light transmitting material such as glass.

The plurality of layers 342 may be located on the light transmitting substrate 341. For example, the plurality of layers 342 may include a first layer L1 and a second layer L2. The first layer L1 may be located between the second layer L2 and the light transmitting substrate 341.

The first layer L1 and the second layer L2 may be formed of materials with different refractive indices. For example, the first layer L1 may have a high refractive index characteristic compared to the second layer L2. In addition, the second layer L2 may have a low refractive index characteristic compared to the first layer L1. That is, the first layer L1 may be a high refractive index layer, and the second layer L2 may be a low refractive index layer.

In this case, the first layer L1 and the second layer L2 may have predetermined refractive indices according to desired wavelengths of light for transmittance and reflection. In addition, each of the first layer L1 and the second layer L2 may be formed of multiple layers rather than a single layer, and the multiple first layers L1 and the multiple second layers L2 may be alternately stacked. With this configuration, the reflector 340 may reflect light LG1 in the visible wavelength band and transmit light LG2 and LG3 in the infrared wavelength band. Therefore, the light LG3 reflected from an object among the light LG2 emitted from the transmitting unit of the sensor CM may be provided to the receiving unit. For example, the reflected light RL with respect to the incident light IL in the entire wavelength band may be light in the visible wavelength band. In addition, transmitted light TL may be light in the infrared wavelength band.

According to the embodiment, the sensor CM may be located under the reflector 340, and light from the backlight may be emitted through the reflector 340, thereby reducing the dark area around the sensor. In addition, a thin bezel can be manufactured.

The light guide plate 320 may include a patterned area PT and a non-patterned area NPT. For example, the upper surface US1 of the light guide plate 320 may be divided into the patterned area PT and the non-patterned area NPT. In addition, the optical sheet 330 may overlap the patterned area PT in the stacking direction.

In the embodiment, the patterned area PT may have a predetermined optical pattern (e.g., dots, a prism structure, a concave-convex structure, etc.). The optical pattern may be manufactured in a printed form, a non-printed from (an unprinted form), etc. The optical pattern may have various shapes. In addition, light may be diffused upward the light guide plate 320 by the optical pattern, thereby providing uniform light to the panel. The patterned area PT may overlap the first display area DA1 in the stacking direction.

Alternatively, the non-patterned area NPT may overlap the second display area (DA2) in the stacking direction. In addition, the non-patterned area NPT may overlap the sloped surface SS1 in the stacking direction. In addition, at least a portion of the optical sheet 330 may not overlap the non-patterned area NPT in the stacking direction. In other words, at least a portion of the optical sheet 330 may be misaligned with the non-patterned area NPT in the stacking direction. For example, a portion of the non-patterned area NPT may overlap the first display area. In this way, the non-patterned area NPT may vary corresponding to the field of view of the sensor CM. In the embodiment, the optical sheet 330 may have the opening 331 to increase the luminance of the light emitted to the second display area DA2.

In addition, when the portion of the non-patterned area NPT overlaps the first display area, the portion of the non-patterned area NPT may overlap the first reflective sheet RF1 in the stacking direction. In addition, the portion of the non-patterned area NPT may also overlap the lower surface BS1 of the light guide plate 320 in the stacking direction.

As described above, the optical sheet 330 may overlap not only the patterned area PT but also the non-patterned area NPT in the stacking direction. For example, the non-patterned area NPT may include a smaller ratio of the optical pattern or a lower height of the optical pattern than the patterned area PT. With this configuration, the effect of reducing dark areas through visible light reflected from the reflector can be improved. In addition, sensing performance of the sensor CM using infrared light can be maintained.

The support frame G may be disposed at an end portion of the light guide plate 320. The support frame G may surround the light guide plate 320, etc. as described above. In addition, the support frame G may be coupled to the bottom cover 410 (or the top cover) by a fixing member. Alternatively, the support frame G can be coupled to the bottom cover 410 by various coupling structures (e.g., penetration structures, etc.). For example, the bottom cover 410 may be passed through at least a partial area of the support frame G.

In addition, in the embodiment, a second adhesive member AD2 may be located between the support frame G and the display panel 100. In particular, the second adhesive member AD2 may overlap the non-display area of the display panel 100. The second adhesive member AD2 may have a form of a tape, etc.

Referring to FIG. 6, as described above, the display panel 100 may include the upper substrate 120, the lower substrate 110, and the liquid crystal layer 130 disposed between the upper substrate 120 and the lower substrate 110.

In addition, signal lines and pixels may be provided on the upper surface of the lower substrate 110 of the display panel 100. As described above, the signal line may include a data line and a gate line that intersect each other, a common line etc. that supply a common voltage. In addition, each of the pixels may include a transistor Tr.

A liquid crystal in the liquid crystal layer 130 may be driven by an electric field generated by a potential difference between the data voltage supplied to the pixel electrode and the common voltage supplied to the common electrode. The transmission amount of the light incident from the backlight unit 300 may be adjusted by driving of the liquid crystal. In addition, a black matrix BM and a color filter CF may be disposed on the lower surface of the upper substrate 120 of the display panel 100.

In addition, as another example, when the display panel 100 is formed in a color filter on TFT array (COT) method, the black matrix BM and color filter may be disposed above the backlight. That is, the color filter substrate on which the color filter CF and black matrix BM are disposed may be disposed on the backlight unit, and the liquid crystal layer and TFT substrate may be disposed over the color filter CF and black matrix BM. In this way, process yield can be improved by changing the location of the black matrix, etc., or light leakage can be suppressed in the non-display area, the second display area, and the like. As a result, uniform luminance through the reflector, etc. can be more easily formed.

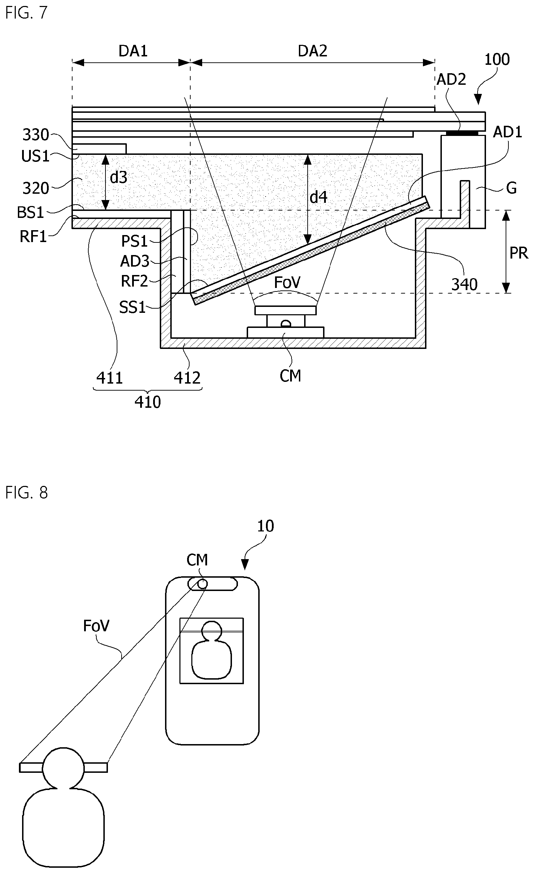

FIG. 7 is a modified example of FIG. 3.

Referring to FIG. 7, the display device may include the display panel 100, the backlight unit 300, the sensor CM, and a case member. In addition, except for the contents described below, the contents described in other embodiments, etc. may be applied to the present embodiment.

The bottom cover 410 may include a base portion 411 and a protruding portion 412. The protruding portion 412 may be located in one area of the bottom cover 410 and may be a portion extending downward from the base portion 411. For example, the sensor CM may be accommodated in the protruding portion 412. Therefore, accommodation space for the sensor CM can be easily secured.

The protruding portion 412 may be located at the edge of the base portion 411 or inside the base portion 411. The protruding portion 412 may be surrounded by the base portion 411. For example, the protruding portion 412 may be located inside the edge of the base portion 411. A location of the protruding portion 412 may be variously adjusted corresponding to a location of the sensor CM.

Corresponding to the protruding portion 412, the light guide plate 320 may have a protruding region PR extending downward. Therefore, a thickness d4 or the maximum thickness of the light guide plate 320 at the sloped surface SS1 may be greater than a thickness d3 of the light guide plate 320 at the lower surface BS1 (or in the first display area).

Under the second display area DA2, the sloped surface SS1 may be located in the protruding region PR. Therefore, at least a portion of the sloped surface SS1 may be located under the light guide plate 320. With this configuration, the light guide plate 320 may be easily supported and coupled to the bottom cover 410. In addition, since the thickness d3 of the light guide plate 320 can be formed small under the first display area, miniaturization of the display device can be easily achieved.

In addition, even when an incidence area of the reflector 340 according to the field of view of the sensor CM increases, a thickness in the entirety of the light guide plate 320 may not increase through the protruding region PR. That is, since the light guide plate 320 has the protruding region PR in a partial area, weight lightening and miniaturization can be maintained even when a sloped angle of the reflector 340 changes.

The protruding region PR may include an extending surface PS1 extending downward from the lower surface BS1 of the light guide plate 320. A second reflective sheet RF2 may be disposed between the protruding surface PS1 and an inner surface of the protruding portion 412 facing the protruding surface PS1.

The second reflective sheet RF2 may be located on the protruding surface PS1. The second reflective sheet RF2 may overlap the reflector 340 in a horizontal direction (a direction from the light source toward the light guide plate). In addition, the second reflective sheet RF2 may have a smaller length in the stacking direction than the reflector 340. Therefore, light reflected from the reflector 340 or directed downward the light guide plate 320 may be reflected to the inside of the light guide plate 320 as much as possible.

For example, the second reflective sheet RF2 may be formed of a structure and material that induces diffused reflection. In addition, bead coating may be applied to the second reflective sheet RF2. In this way, the second reflective sheet RF2 can increase the amount of light irradiated to the display panel 100. Therefore, the reduction in the dark area can be more effectively implemented.

The protruding region PR may be a member separated from the light guide plate 320. Therefore, in order to couple the protruding region PR to the light guide plate 320, an additional adhesive member may be located between the protruding region PR and the light guide plate 320. In addition, the adhesive member and the reflective sheet outside the adhesive member may be further disposed on surfaces other than the sloped surface SS1 of the protruding region PR.

On the upper surface of the light guide plate 320 disposed in the second display area DA2, the optical pattern may be absent or the optical pattern whose size is smaller than that a size of the optical pattern formed in the first display area DA1 may be formed. In addition, an additional adhesive member or optical member may be further applied to have a flat surface.

A third adhesive member AD3 may be located between the second reflective sheet RF2 and the extending surface PS1. The first adhesive member AD1 and the third adhesive member AD3 may be formed of optical adhesive films. For example, the first adhesive member AD1 and the third adhesive member AD3 may be formed of light-transmissive materials. In addition, the first adhesive member AD1 and the third adhesive member AD3 may be formed of a material providing a predetermined haze level (opacity level due to light diffusion). Therefore, light uniformity can be easily adjusted.

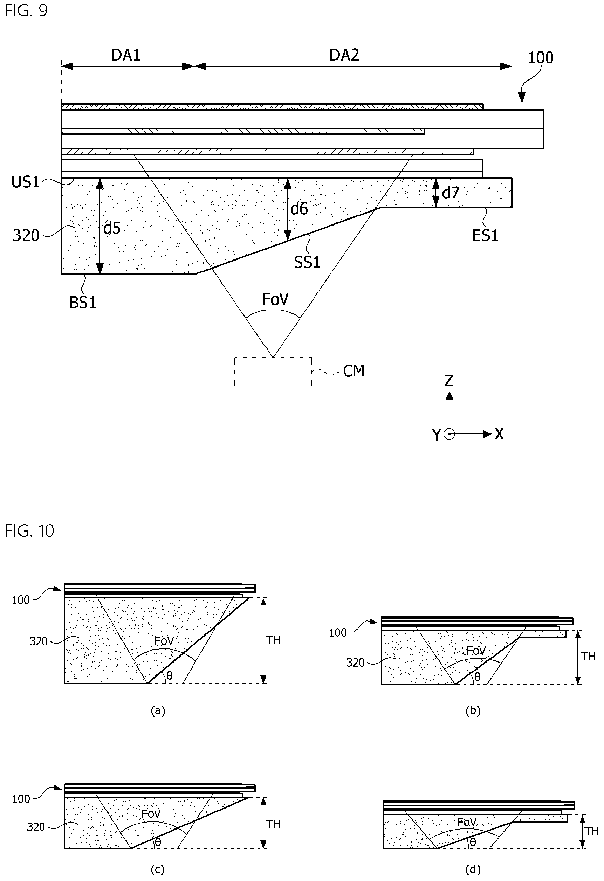

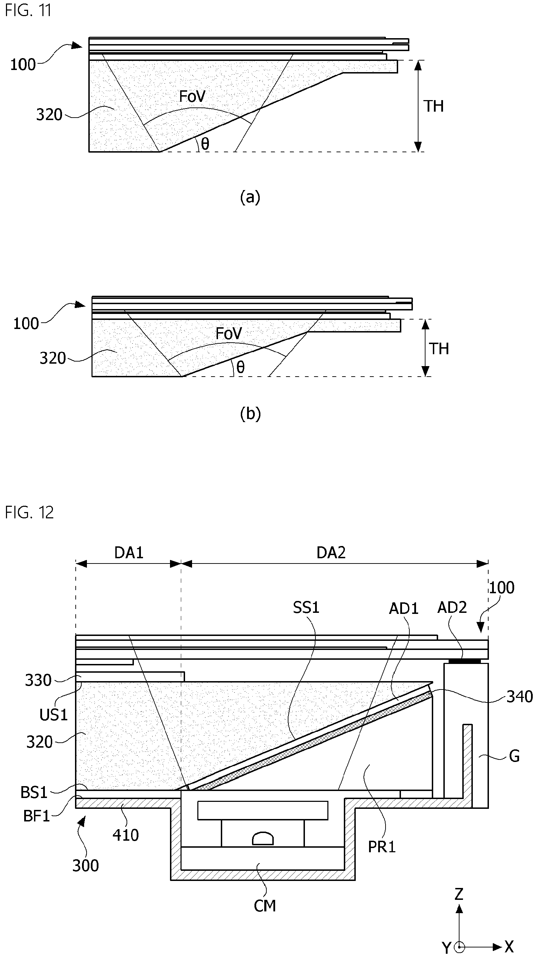

FIG. 8 is a view for describing a function of a sensor in a display device according to the embodiment, FIG. 9 is another structure of a light guide plate in the display device according to the embodiment, and FIGS. 10 and 11 are views for describing a thickness change of the light guide plate according to a field of view and a structure of the light guide plate in the display device.

Referring to FIG. 8, the sensor CM in the display device 10 of an electronic device may have a predetermined field of view (FOV). In one embodiment, the field of view of the sensor CM may be between 30 degrees and 60 degrees. For example, the field of view of the sensor CM may be 53 degrees. Corresponding to the field of view of the sensor CM, a thickness of the light guide plate may change according to a sloped angle of the reflector.

Referring to FIG. 9, the light guide plate 320 may have an extending portion extending from the sloped surface SS1. Corresponding to this extending portion, the light guide plate 320 may include a flat surface ES1 extending from the sloped surface SS1 to the other side thereof. The flat surface ES1 may be a flat surface such as the upper surface US1 or the lower surface BS1. Therefore, the light guide plate 320 may have a stepped structure inclined toward the other side thereof. According to this configuration, an overall thickness of the light guide plate 320 can be reduced, thereby providing miniaturization and ease of manufacturing of the light guide plate. However, the present disclosure is not necessarily limited thereto, and the flat surface ES1 may have an inclined structure like the sloped surface SS1. In this case, the flat surface ES1 may be disposed to be inclined at an angle smaller than the sloped angle of the sloped surface SS1.

The flat surface ES1 may be disposed under the second display area DA2. At least a portion of the flat surface ES1 may overlap the second display area DA2 in the stacking direction.

More specifically, in the light guide plate 320, the sloped surface SS1 may be located between the lower surface BS1 and the flat surface ES1. In addition, in the light guide plate 320, the upper surface US1 may be a surface facing the lower surface BS1, the sloped surface SS1, and the flat surface ES1.

The light guide plate 320 may have an area where a thickness thereof decreases from one side where the light source is disposed toward the other side. A thickness d5 of the light guide plate 320 on the lower surface BS1 may be greater than a thickness d6 of the light guide plate 320 on the sloped surface SS1. The thickness d6 of the light guide plate 320 on the sloped surface SS1 may gradually decrease in a first direction (an X-axis direction). In addition, a thickness d7 of the light guide plate 320 on the flat surface ES1 may be constant in the first direction (the X-axis direction).

The thickness d7 of the light guide plate 320 on the flat surface ES1 may be formed to be smaller than or equal to the thickness d6 of the light guide plate 320 on the sloped surface SS1. That is, the thickness d7 of the light guide plate 320 on the flat surface ES1 may be smaller than the thickness d5 of the light guide plate 320 on the lower surface BS1.

As in the present example, when the light guide plate 320 extends to the other side thereof, the light guide plate 320 may have the flat surface being flat outside the sloped surface. Therefore, the light guide plate 320 may have the flat surface being flat rather than the sloped surface in an area outside the field of view or viewing angle of the sensor. Therefore, a more compact light guide plate can be provided. That is, when an angle (an acute angle) between the sloped surface and the flat surface of the lower surface keeps the same, the maximum thickness (e.g., d5) of the light guide plate 320 can be relatively reduced by having the flat surface compared to the case having only the sloped surface.

**[Table 1]**

| Sloped Angle | 45° | 30° | 20° |
|---|---|---|---|
| Thickness of light guide plate having flat surface | 5.5mm ((b) of FIG. 10) | 3mm ((d) of FIG. 10 and (a) of FIG. 11) | 2mm ((b) of FIG. 11) |
| Thickness of light guide plate without flat surface | 10mm ((a) of FIG. 10) | 5mm ((c) of FIG. 10) | - |

Table 1 shows the thickness of the light guide plate according to each sloped angle θ and the presence or absence of the flat surface in FIGS. 10 and 11. Here, the sloped angle θ of the reflector for the light emitted from the sensor may be the same as the angle (the acute angle) between the sloped surface and the flat surface of the lower surface. In addition, a size (e.g., a width) of the sensor CM may be 3.5 mm. The size (or the width) of the sensor CM may correspond to a length in a direction (or a direction from the light source to the light guide plate) from one side to the other side of the light guide plate. In addition, the field of view (FOV) may be 53.13°, and the thickness of the light guide plate on the flat surface may be 0.6 mm. Referring to FIG. 10 and Table 1, it can be seen that the thickness of the light guide plate 320 is reduced because the light guide plate has the flat surface being flat (or the extending portion) when the sloped angle θ is the same. That is, the thickness of the light guide plate can be reduced by forming a range outside the field of view (FOV) flat.

For example, when comparing (a) of FIG. 10 and (b) of FIG. 10, which have the same sloped angle θ, it can be seen that the thickness TH of the light guide plate decreases from 10 mm to 5.5 mm. In addition, when comparing (c) of FIG. 10 and (d) of FIG. 10, which have the same sloped angle θ, it can be seen that the thickness TH of the light guide plate decreases from 5 mm to 3 mm.

In addition, in the case of having the same structure, it can be seen that as the sloped angle θ increases, the thickness of the light guide plate increases. For example, when comparing (a) of FIG. 10 and (c) of FIG. 10, it can be seen that as the sloped angle θ increases, the thickness of the light guide plate increases.

Table 2 shows the transmittance (%) for lights in visible wavelength (550 nm) and infrared wavelength (940 nm) according to an incident angle when the reflector is a dichroic filter. Here, the incident angle is an angle at which light is incident on the dichroic filter.

**[Table 2]**

| Wavelength \ Incide nt Angle(°) | 0 | 20 | 45 | 70 |
|---|---|---|---|---|
| 550nm | 0.03 % | 0.09% | 0.05% | 0.37% |
| 940nm | 97.2 % | 91.4% | 75.1% | 48.7% |

As shown in Table 2, it can be seen that even when the incident angle increases, the transmittance for light in the visible wavelength band remains less than 1%. That is, reflectance of the reflector for the light in the visible light wavelength band may be less affected by the incident angle. Alternatively, the transmittance for light in the infrared wavelength band may be greatly affected by an increase in the incident angle. **In** particular, it can be seen that as the incident angle increases, the transmittance for the light in the infrared wavelength decreases. Therefore, it can be seen that by having a small incident angle and having the extending portion (or the flat surface), it is possible to provide the display device that is more compact with improved sensing sensitivity through high infrared light transmittance.

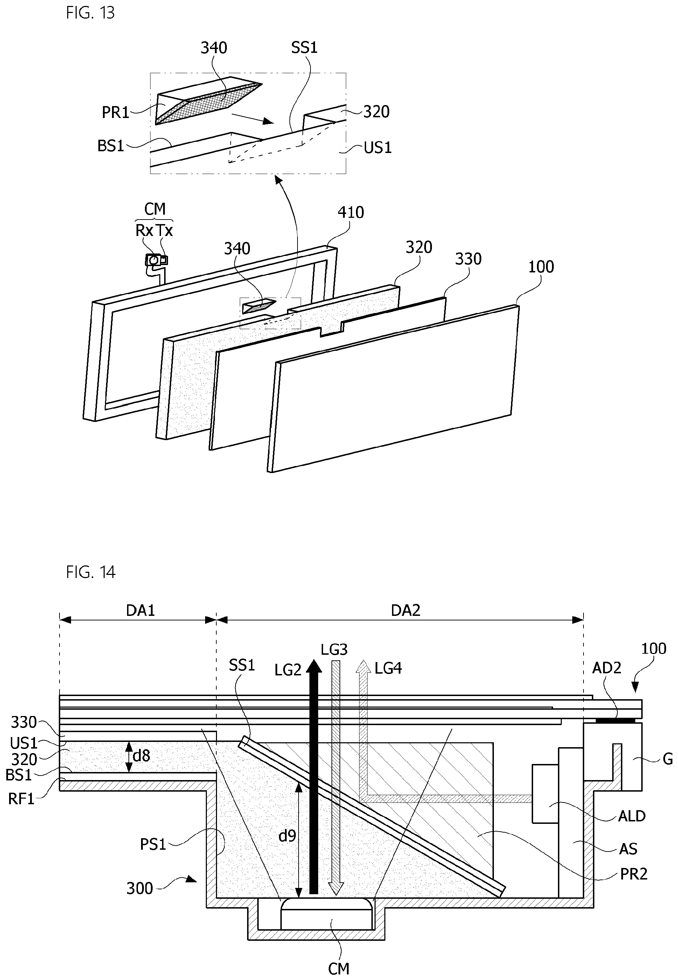

FIG. 12 is a cross-sectional view of a display device according to a second embodiment, and FIG. 13 is a view showing a light guide plate, a reflector, and a first prism in the display device according to the second embodiment.

Referring to FIGS. 12 and 13, a display device according to the second embodiment may include the display panel 100, the backlight unit 300, the sensor CM, and a case member. In addition, the backlight unit 300 may further include a first prism PR1. In addition, except for the contents described below, the contents described in other embodiments, etc. may be applied to the present embodiment.

In the present embodiment, the light guide plate 320 may have the sloped surface SS1 overlapping the second display area DA2. In addition, as described above, light emitted from a light source may be guided in the light guide plate 320 to reflect to the display panel 100 by the reflector 340 disposed at the other side of the light guide plate 320.

The first prism PR1 may be disposed under the sloped surface SS1. In addition, the first prism PR1 may overlap the sloped surface SS1 in the stacking direction. In addition, the first prism PR1 may be located at the other side of the light guide plate 320. For example, the first prism PR1 may be located between the light guide plate 320 and the support frame G. In addition, the first prism PR1 may be located between the reflector 340 and the sloped surface SS1.

The first prism PR1 may be emitted from the light source and may support the sloped surface SS1 of the light guide plate 320 and the reflector 340. For example, a sloped surface of the first prism PR1 may come into contact with the reflector 340. In addition, one surface (e.g., a lower surface) of the first prism PR1 may be supported by the bottom cover 410. Therefore, reliability of the light guide plate 320 can be improved. In addition, as the reflector 340 is surrounded by the first prism PR1, it is possible to suppress the introduction of foreign substances, etc. into the reflector 340 through which light in the infrared wavelength band is transmitted. Therefore, improved sensing sensitivity can be maintained.

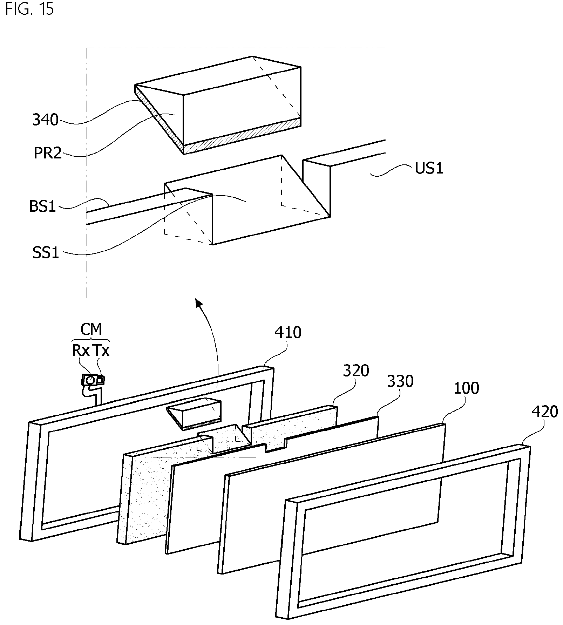

FIG. 14 is a cross-sectional view of a display device according to a third embodiment, and FIG. 15 is a view showing a light guide plate, a reflector, and a second prism in the display device according to the third embodiment.

Referring to FIGS. 14 and 15, a display device according to the third embodiment may include the display panel 100, the backlight unit 300, the sensor CM, and a case member. In addition, the display device or the backlight unit 300 may further include a second prism PR2, a light-emitting unit ALD, and a light-emitting unit substrate AS. In addition, except for the contents described below, the contents described in other embodiments, etc. may be applied to the present embodiment.

In the light guide plate 320 of the present embodiment, the sloped surface SS1 may not overlap the upper surface US1 in the stacking direction. In addition, as described above, the light guide plate 320 may have a protruding region extending downward. In addition, the sloped surface SS1 may be located in the protruding region. In addition, since a thickness d8 of the light guide plate 320 can be formed small under the first display area, miniaturization of the display device can be easily achieved. In addition, even when an incident area of the reflector 340 according to the field of view of the sensor CM increases, a thickness of the light guide plate 320 can be prevented from increasing through the protrusion region. In other words, it is possible to maintain light weight and miniaturization even when the sloped angle of the reflector 340 changes.

Corresponding to the protruding region PR, the light guide plate 320 may include the extending surface PS1 extending downward from the lower surface BS1 thereof. The thickness of the light guide plate 320 may be increased due to the extending surface PS1. For example, the thickness d8 of the light guide plate 320 on the lower surface BS1 may be smaller than a thickness d9 of the light guide plate 320 on the sloped surface SS1.

In addition, the distance between the sloped surface SS1 and the sensor CM in the stacking direction may decrease as the sloped surface SS1 moves toward the other side of the light guide plate 320. In addition, the width of the light guide plate 320 may decrease along the stacking direction (or first direction) at the sloped surface SS1. In addition, the thickness d9 of the light guide plate 320 under the sloped surface SS1 may decrease toward the other side of the light guide plate 320. For example, a thickness of the light guide plate 320 in an area closest to one side of the light guide plate 320 may be greater than a thickness of the light guide plate 320 in an area closest to the other side of the light guide plate 320. According to a sloped structure of the sloped surface SS1, the reflector 340 disposed on the sloped surface SS1 may reflect the light output from the light source to the sensor. As a modified example, the thickness of the light guide plate 320 on the lower surface BS1 may be the same as a thickness of the extending surface PS1.

In addition, the light-emitting unit ALD may perform the same function as the light source. For example, the light-emitting unit ALD may emit light of visible wavelength. In addition, the reflector 340 may reflect the light LG4 emitted from the light-emitting unit ALD upward or to the display panel 100. Therefore, the dark area generated in the second display area DA2 can be reduced. In addition, when the amount of light of the light-emitting unit ALD is controlled, occurrence of a bright line, etc. can be suppressed, or the light uniformity between the first display area and the second display area can be improved.

The light-emitting unit ALD may be located on the light-emitting unit substrate AS. The light-emitting unit substrate AS may be electrically connected to a circuit portion. Therefore, as described below, control signals of the light-emitting unit ALD may be applied to the light-emitting unit substrate AS depending on whether the sensor is driven (on/off).

The second prism PR2 may be located on the reflector 340. The second prism PR2 may be located between the reflector 340 and the light-emitting unit ALD. In addition, the second prism PR2 may be located between the sloped surface SS1 and the light-emitting unit ALD. The second prism PR2 may surround the reflector 340 above the reflector 340. Therefore, it is possible to suppress the introduction of foreign substances, etc. into the reflector 340 through which the light in the infrared wavelength band is transmitted and the light in visible wavelength is reflected. Therefore, improved sensing sensitivity can be maintained and the dark areas can be easily reduced.

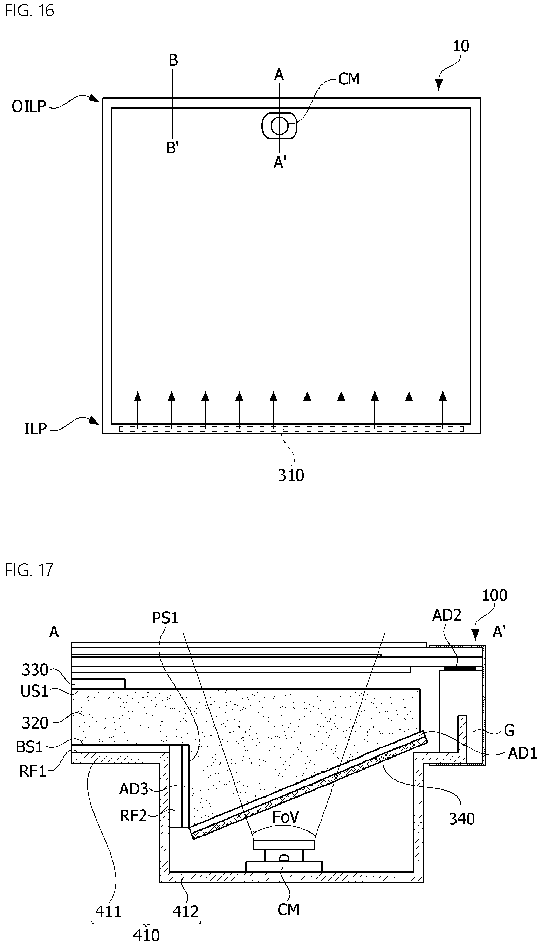

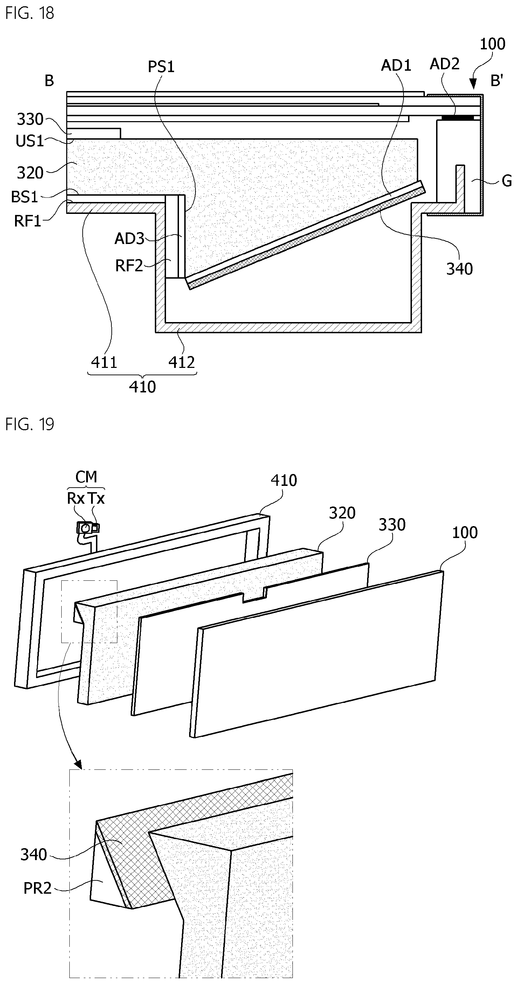

FIG. 16 is a plan view of a display device according to a modified example, FIG. 17 is a cross sectional view along line AA' in FIG. 16, FIG. 18 is a cross sectional view along line BB' in FIG. 16, and FIG. 19 is a view showing a light guide plate and a reflector in a display device according to a modified example.

Referring to FIG. 16, a display device may include the display panel 100, the backlight unit 300, the sensor CM, and a case member. Except for the contents described below, the contents described in other embodiments, etc. may be applied to the present embodiment. The display device 10 may be divided into an incident light portion ILP adjacent to the light source 310 and an opposing incident light portion OILP opposing the incident light portion ILP. Likewise, one side of the light guide plate adjacent to the light source 310 may correspond to the incident light portion, and the other side spaced far apart from the light source 310 may correspond to the opposing light portion or the opposing incident light portion. Therefore, the amount of light guided or incident to the opposing incident light portion is light not only above the sensor CM located on the other side of the light guide plate but also in an area adjacent to the sensor CM, and may be less than the amount of light in the incident light portion.

Referring to FIGS. 17 to 19, the display device according to the modified example may include the display panel 100, the backlight unit 300, the sensor CM, and a case member. In addition, except for the contents described below, the contents described in other embodiments, etc. may be applied to the present embodiment.

The sloped surface SS1 may overlap not only the second display area overlapping the sensor CM, but also an area overlapping the opposing incident light portion of the first display area. For example, the sloped surface SS1 may be located over the entire opposing incident light portion. That is, the sloped surface SS1 may be located in an area other than the area overlapping the sensor CM. In addition, the sloped surface SS1 may overlap an area overlapping the opposing incident light portion of the first display area and the second display area. In addition, the reflector 340 may be disposed on the sloped surface SS1 and may overlap the sloped surface SS1. Therefore, the reflector 340 may also be located over the entire opposing incident light portion. That is, the reflector 340 may also be located in an area other than the area overlapping the sensor CM. And the reflector 340 may overlap the area overlapping the opposing incident light portion of the first display area and the second display area. With this configuration, even when the amount of light guided to the opposing incident light portion is small, light may be reflected to the display panel 100 by the reflector 340. Therefore, luminance can be uniform through the entirety of the display panel.

In addition, in order to increase the amount of light provided to the display panel 100, a third adhesive member AD3 and a second reflective sheet RF2 may be disposed on the extending surface of the protruding region of the light guide plate 320. The third adhesive member AD3 and the second reflective sheet RF2 may be located in the area overlapping the opposing incident light portion as described above. The second reflective sheet RF2 may be formed of a structure and material that induces diffused reflection. In addition, bead coating may be applied to the second reflective sheet RF2. In addition, the third adhesive member AD3 may be formed of a material providing a predetermined haze level (opacity level due to light diffusion). In addition, at least one of the extending surface and the sloped surface may have various optical patterns for diffusion. Therefore, even when the amount of light guided not only to the second display area but also to the opposing incident light portion is small, the amount of light output to the display panel 100 overlapping the opposing incident light portion can be increased. Therefore, since the reduction in the dark area can be effectively implemented, and luminance can be uniform through the entirety of the display panel.

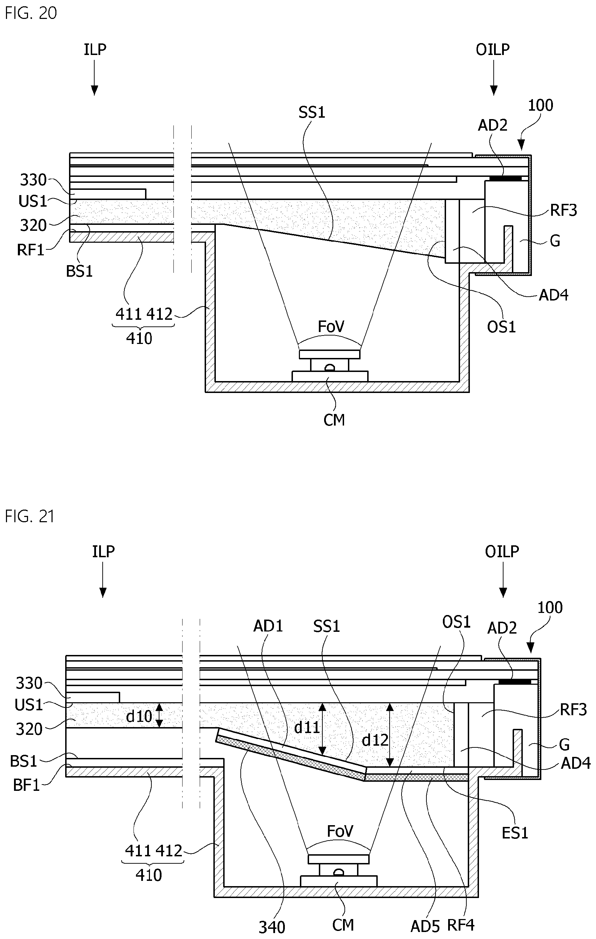

FIG. 20 is a cross-sectional view of a display device according to another modified example, and FIG. 21 is a cross-sectional view of a display device according to still another modified example.

Referring to FIG. 20, a display device according to another modified example may include the display panel 100, a circuit portion, the backlight unit 300, the sensor CM, and a case member. In addition, except for the contents described below, the contents described in other embodiments, etc. may be applied to the present embodiment.

In the present example, the display device may include a third reflective sheet RF3 and a fourth adhesive member AD4. The light guide plate 320 may include the lower surface BS1, the upper surface US1, and the sloped surface SS1. In addition, the light guide plate 320 may include an outermost surface OS1 located on the other side thereof. The outermost surface OS1 may be connected to the sloped surface SS1 and the upper surface US1. For example, the thickness of the light guide plate 320 on the sloped surface SS1 may increase toward the other side of the light guide plate 320. Alternatively, the thickness of the light guide plate 320 may increase toward the opposing incident light portion. In addition, the thickness of the light guide plate 320 at the incident light portion may be smaller than the thickness of the light guide plate 320 at the opposing incident light portion.

The third reflective sheet RF3 and the fourth adhesive member AD4 may be located on the outermost surface OS1 of the light guide plate 320. The third reflective sheet RF3 may be formed of a structure and material that induces diffused reflection. In addition, bead coating may be applied to the third reflective sheet RF3.

In addition, the fourth adhesive member AD4 may be formed of a material providing a predetermined haze level (opacity level due to light diffusion). In addition, at least one of the sloped surface and the outermost surface OS1 may have various optical patterns for diffusion. Therefore, even when the amount of light guided not only to the second display area but also to the opposing incident light portion is small, the amount of light output to the display panel 100 overlapping the opposing incident light portion can be increased. Therefore, since the reduction in the dark area can be effectively implemented, and luminance can be uniform through the entirety of the display panel.

Referring to FIG. 21, a display device according to the still another modified example may include the display panel 100, a circuit portion, the backlight unit 300, the sensor CM, and a case member. In addition, except for the contents described below, the contents described in other embodiments, etc. may be applied to the present embodiment.

In the present example, the display device may include the third reflective sheet RF3 and a fourth adhesive member AD4 as described above. In addition, the display device may include a fourth reflective sheet RF4 and a fifth adhesive member AD5.

As described above, the light guide plate 320 may include the lower surface BS1, the upper surface US1, and the sloped surface SS1. **In** addition, the light guide plate 320 may include the sloped surface SS1 and the flat surface ES1 extending from the sloped surface SS1 to the other side. In addition, the light guide plate 320 may include the outermost surface OS1 located at the other side. The flat surface ES1 may be a flat surface such as the upper surface US1 or the lower surface BS1. Therefore, the light guide plate 320 may have a stepped structure inclined toward the other side thereof. In addition, the outermost surface OS1 may be connected to the sloped surface SS1 and the upper surface US1. For example, the thickness of the light guide plate 320 on the sloped surface SS1 may increase toward the other side of the light guide plate 320. Alternatively, the thickness of the light guide plate 320 may increase toward the opposing incident light portion. In addition, the thickness of the light guide plate 320 at the incident light portion may be smaller than the thickness of the light guide plate 320 at the opposing incident light portion.

More specifically, a thickness d10 of the light guide plate 320 on the lower surface BS1 may be smaller than a thickness d12 of the light guide plate 320 at the flat surface ES1. In addition, a thickness d11 of the light guide plate 320 on the sloped surface SS1 may gradually increase toward the other side or the opposing incident light portion (opposing light portion). For example, a thickness of the light guide plate 320 in an area closest to one side of the light guide plate 320 may be greater than a thickness of the light guide plate 320 in an area closest to the other side of the light guide plate 320.

The third reflective sheet RF3 and the fourth adhesive member AD4 may be located on the outermost surface OS1 of the light guide plate 320. The fourth adhesive member AD4 may be located between the light guide plate 320 and the third reflective sheet RF3.

In addition, the reflector 340 may be disposed under the sloped surface SS1 of the light guide plate 320. In addition, the first adhesive member AD1 may be located between the reflector 340 and the sloped surface SS1.

In addition, the fourth reflective sheet RF4 may be disposed on the flat surface ES1 of the light guide plate 320. The fourth reflective sheet RF4 may reflect light directed downward the light guide plate 320 within the light guide plate 320 to the inside of the light guide plate 320. In addition, the fifth adhesive member AD5 may be located between the light guide plate 320 and the fourth reflective sheet RF4. For example, the fifth adhesive member AD5 may be located between the flat surface ES1 and the fourth reflective sheet RF4.

At least one of the third reflective sheet RF3 and the fourth reflective sheet RF4 may be formed of a structure and material that induces diffused reflection. In addition, bead coating may be applied to at least one of the third reflective sheet RF3 and the fourth reflective sheet RF4.

In addition, at least one of the first adhesive member AD1, the fourth adhesive member AD4 and the fifth adhesive member AD5 may be formed of a material providing a predetermined haze level (opacity level due to light diffusion). In addition, at least one of the flat surface, the sloped surface, and the outermost surface may have various optical patterns for diffusion. Therefore, even when the amount of light guided not only to the second display area but also to the opposing incident light portion is small, the amount of light output to the display panel 100 overlapping the opposing incident light portion can be increased. Therefore, since the reduction in the dark area can be effectively implemented, and luminance can be uniform through the entirety of the display panel.

According to embodiments, an imaging area is not recognized from the outside, a dark area phenomenon in an area where a sensor is disposed can be improved, and light uniformity can be improved.

In addition, it is possible to achieve miniaturization with a narrow bezel and a reduced thickness.

In addition, embodiments can provide a display device that can be easily miniaturized through an extending portion.

## Claims

1. A display device (10) comprising:
a backlight unit (300);
a display panel (100) disposed on the backlight unit (300) and including a first display area (DA1) and a second display area (DA2); and
a sensor (CM) disposed under the second display area (DA2),
wherein the backlight unit (300) includes:
a light guide plate (320) disposed under the first display area (DA1) and the second display area (DA2) and including an upper surface (US1), a lower surface (BS1) and a sloped surface (SS1), wherein the sloped surface (SS1) is a surface sloped at a predetermined angle with respect to the upper surface (US1) and the lower surface (BS1);
a light source (310) configured to radiate light to the light guide plate (320); and
a reflector (340) disposed between the second display area (DA2) and the sensor (CM), disposed obliquely with respect to a direction from the light source (310) toward the light guide plate (320), and reflecting incident visible light of the light source (310) to the second display area (DA2).

2. The display device (10) of claim 1, wherein light emitted from the sensor (CM) passes through the reflector (340).

3. The display device (10) of claim 2, wherein the light emitted from the sensor (CM) is emitted to the outside by passing through the display panel (100), reflected from an external object, and received by the sensor (CM).

4. The display device (10) of claim 3, wherein the sensor (CM) includes an infrared camera.

5. The display device (10) of any of claims 1 to 4, further comprising an optical sheet (330) disposed on the backlight unit (300),
wherein the optical sheet (330) includes an opening (331) corresponding to the second display area (DA2).

6. The display device (10) of any of claims 1 to 5, wherein the light source (310) is disposed on one side of the light guide plate (320), and the reflector (340) is disposed on the other side facing the one side of the light guide plate (320).

7. The display device (10) of claim 6, wherein the light guide plate (320) includes the sloped surface (SS1) disposed on the other side thereof, and the reflector (340) is disposed on the sloped surface (SS1).

8. The display device (10) of claim 7, wherein the sloped surface (SS1) is disposed in an area overlapping the sensor (CM).

9. The display device (10) of claim 7 or 8, wherein the reflector (340) reflects light incident on the light guide plate (320) to the second display area (DA2).

10. The display device (10) of any of claims 7 to 9, wherein the light guide plate (320) includes a flat surface (ES1) extending from the sloped surface (SS1) to a side opposite to the light source (310), and the flat surface (ES1) overlaps the second display area (DA2).

11. The display device (10) of claim 10, wherein a thickness (d7) of the light guide plate (320) on the flat surface (ES1) is less than a thickness (d6) of the light guide plate (320) on the sloped surface (SS1).

12. The display device (10) of any of claims 7 to 11, further comprising a first prism (PR1) disposed between the sloped surface (SS1) and the sensor (CM).

13. The display device (10) of any of claims 7 to 12, further comprising a light-emitting unit (ALD) disposed on the other side of the light guide plate (320),
wherein the sloped surface (SS1) does not overlap the upper surface (US1).

14. The display device (10) of claim 13, wherein a thickness (d9) of the light guide plate (320) in the second display area (DA2) decreases toward the other side of the light guide plate (320).

15. The display device (10) of claim 13 or 14, further comprising a second prism (PR2) disposed between the sloped surface (SS1) and the display panel (100).

## Patentansprüche

1. Anzeigevorrichtung (10), aufweisend:
eine Hintergrundbeleuchtungseinheit (300),
ein Anzeigepanel (100), das auf der Hintergrundbeleuchtungseinheit (300) angeordnet ist und einen ersten Anzeigebereich (DA1) und einen zweiten Anzeigebereich (DA2) aufweist, und
einen Sensor (CM), der unter dem zweiten Anzeigebereich (DA2) angeordnet ist,
wobei die Hintergrundbeleuchtungseinheit (300) aufweist:
eine Lichtleitplatte (320), die unter dem ersten Anzeigebereich (DA1) und dem zweiten Anzeigebereich (DA2) angeordnet ist und eine obere Fläche (US1), eine untere Fläche (BS1) und eine geneigte Fläche (SS1) aufweist, wobei die geneigte Fläche (SS1) eine Fläche ist, die in einem vorbestimmten Winkel bezüglich der oberen Fläche (US1) und der unteren Fläche (BS1) geneigt ist,
eine Lichtquelle (310), die konfiguriert ist, um Licht auf die Lichtleitplatte (320) zu strahlen, und
einen Reflektor (340), der zwischen dem zweiten Anzeigebereich (DA2) und dem Sensor (CM) angeordnet ist, bezüglich einer Richtung von der Lichtquelle (310) zu der Lichtleitplatte (320) hin schräg angeordnet ist und einfallendes sichtbares Licht der Lichtquelle (310) zu dem zweiten Anzeigebereich (DA2) reflektiert.

2. Anzeigevorrichtung (10) gemäß Anspruch 1, wobei von dem Sensor (CM) emittiertes Licht durch den Reflektor (340) hindurchgeht.

3. Anzeigevorrichtung (10) gemäß Anspruch 2, wobei das von dem Sensor (CM) emittierte nach außen emittiert wird, wobei es durch das Anzeigepanel (100) hindurchgeht, von einem externen Objekt reflektiert und von dem Senor (CM) empfangen wird.

4. Anzeigevorrichtung (10) gemäß Anspruch 3, wobei der Sensor (CM) eine Infrarotkamera aufweist.

5. Anzeigevorrichtung (10) gemäß irgendeinem der Ansprüche 1 bis 4, ferner aufweisend eine auf der Hintergrundbeleuchtungseinheit (300) angeordnete optische Folie (330),
wobei die optische Folie (330) eine mit dem zweiten Anzeigebereich (DA2) korrespondierende Öffnung (331) aufweist.

6. Anzeigevorrichtung (10) gemäß irgendeinem der Ansprüche 1 bis 5, wobei die Lichtquelle (310) auf einer Seite der Lichtleitplatte (320) angeordnet ist und der Reflektor (340) auf der anderen Seite, die der einen Seite der Lichtleitplatte (320) zugewandt ist, angeordnet ist.

7. Anzeigevorrichtung (10) gemäß Anspruch 6, wobei die Lichtleitplatte (320) die auf der anderen Seite davon angeordnete geneigte Fläche (SS1) aufweist und der Reflektor (340) auf der geneigten Fläche (SS1) angeordnet ist.

8. Anzeigevorrichtung (10) gemäß Anspruch 7, wobei die geneigte Fläche (SS1) in einem Bereich angeordnet ist, der den Sensor (CM) überlappt.

9. Anzeigevorrichtung (10) gemäß Anspruch 7 oder 8, wobei der Reflektor (340) auf die Lichtleitplatte (320) einfallendes Licht zu dem zweiten Anzeigebereich (DA2) reflektiert.

10. Anzeigevorrichtung (10) gemäß irgendeinem der Ansprüche 7 bis 9, wobei die Lichtleitplatte (320) eine ebene Fläche (ES1) aufweist, die sich von der geneigten Fläche (SS1) zu einer der Lichtquelle (310) gegenüberliegenden Seite erstreckt, und die ebene Fläche (ES1) den zweiten Anzeigebereich (DA2) überlappt.

11. Anzeigevorrichtung (10) gemäß Anspruch 10, wobei eine Dicke (d7) der Lichtleitplatte (320) auf der ebenen Fläche (ES1) geringer als eine Dicke (d6) der Lichtleitplatte (320) auf der geneigten Fläche (SS1) ist.

12. Anzeigevorrichtung (10) gemäß irgendeinem der Ansprüche 7 bis 11, ferner aufweisend ein erstes Prisma (PR1), das zwischen der geneigten Fläche (SS1) und dem Sensor (CM) angeordnet ist.

13. Anzeigevorrichtung (10) gemäß irgendeinem der Ansprüche 7 bis 12, ferner aufweisend eine lichtemittierende Einheit (ALD), die auf der anderen Seite der Lichtleitplatte (320) angeordnet ist,
wobei die geneigte Fläche (SS1) die obere Fläche (US1) nicht überlappt.

14. Anzeigevorrichtung (10) gemäß Anspruch 13, wobei eine Dicke (d9) der Lichtleitplatte (320) im zweiten Anzeigebereich (DA2) in Richtung zu der anderen Seite der Lichtleitplatte (320) hin abnimmt.

15. Anzeigevorrichtung (10) gemäß Anspruch 13 oder 14, ferner aufweisend ein zweites Prisma (PR2), das zwischen der geneigten Fläche (SS1) und dem Anzeigepanel (100) angeordnet ist.

## Revendications

1. Dispositif d'affichage (10), comprenant :
une unité de rétroéclairage (300) ;
un panneau d'affichage (100) disposé sur l'unité de rétroéclairage (300) et comprenant une première zone d'affichage (DA1) et une deuxième zone d'affichage (DA2) ; et
un capteur (CM) disposé sous la deuxième zone d'affichage (DA2),
dans lequel l'unité de rétroéclairage (300) comprend :
une plaque de guidage de lumière (320) disposée sous la première zone d'affichage (DA1) et la deuxième zone d'affichage (DA2) et comportant une surface supérieure (US1), une surface inférieure (BS1) et une surface inclinée (SS1), la surface inclinée (SS1) étant une surface inclinée selon un angle prédéterminé par rapport à la surface supérieure (US1) et à la surface inférieure (BS1) ;
une source lumineuse (310) configurée pour irradier de la lumière vers la plaque de guidage de lumière (320) ; et
un réflecteur (340) disposé entre la deuxième zone d'affichage (DA2) et le capteur (CM), disposé obliquement par rapport à une direction allant de la source lumineuse (310) vers la plaque de guidage de lumière (320), et réfléchissant la lumière visible incidente de la source lumineuse (310) vers la deuxième zone d'affichage (DA2).

2. Dispositif d'affichage (10) selon la revendication 1, dans lequel la lumière émise à partir du capteur (CM) traverse le réflecteur (340).

3. Dispositif d'affichage (10) selon la revendication 2, dans lequel la lumière émise à partir du capteur (CM) est émise vers l'extérieur en traversant le panneau d'affichage (100), réfléchie par un objet externe, puis reçue par le capteur (CM).

4. Dispositif d'affichage (10) selon la revendication 3, dans lequel le capteur (CM) comprend une caméra infrarouge.

5. Dispositif d'affichage (10) selon l'une quelconque des revendications 1 à 4, comprenant en outre une feuille optique (330) disposée sur l'unité de rétroéclairage (300),
dans lequel la feuille optique (330) comprend une ouverture (331) correspondant à la deuxième zone d'affichage (DA2).

6. Dispositif d'affichage (10) selon l'une quelconque des revendications 1 à 5, dans lequel la source lumineuse (310) est disposée sur un côté de la plaque de guidage de lumière (320), et le réflecteur (340) est disposé sur l'autre côté faisant face audit un côté de la plaque de guidage de lumière (320).

7. Dispositif d'affichage (10) selon la revendication 6, dans lequel la plaque de guidage de lumière (320) comporte la surface inclinée (SS1) disposée sur son autre côté, et le réflecteur (340) est disposé sur la surface inclinée (SS1).

8. Dispositif d'affichage (10) selon la revendication 7, dans lequel la surface inclinée (SS1) est disposée dans une zone chevauchant le capteur (CM).

9. Dispositif d'affichage (10) selon la revendication 7 ou 8, dans lequel le réflecteur (340) réfléchit la lumière incidente sur la plaque de guidage de lumière (320) vers la deuxième zone d'affichage (DA2).

10. Dispositif d'affichage (10) selon l'une quelconque des revendications 7 à 9, dans lequel la plaque de guidage de lumière (320) comprend une surface plane (ES1) s'étendant depuis la surface inclinée (SS1) jusqu'à un côté opposé à la source lumineuse (310), et la surface plane (ES1) chevauche la deuxième zone d'affichage (DA2).

11. Dispositif d'affichage (10) selon la revendication 10, dans lequel une épaisseur (d7) de la plaque de guidage de lumière (320) sur la surface plane (ES1) est inférieure à une épaisseur (d6) de la plaque de guidage de lumière (320) sur la surface inclinée (SS1).

12. Dispositif d'affichage (10) selon l'une quelconque des revendications 7 à 11, comprenant en outre un premier prisme (PR1) disposé entre la surface inclinée (SS1) et le capteur (CM).

13. Dispositif d'affichage (10) selon l'une quelconque des revendications 7 à 12, comprenant en outre une unité électroluminescente (ALD) disposée sur l'autre côté de la plaque de guidage de lumière (320),
dans lequel la surface inclinée (SS1) ne chevauche pas la surface supérieure (US1).

14. Dispositif d'affichage (10) selon la revendication 13, dans lequel une épaisseur (d9) de la plaque de guidage de lumière (320) dans la deuxième zone d'affichage (DA2) diminue vers l'autre côté de la plaque de guidage de lumière (320).

15. Dispositif d'affichage (10) selon la revendication 13 ou 14, comprenant en outre un deuxième prisme (PR2) disposé entre la surface inclinée (SS1) et le panneau d'affichage (100).
